(19) Europäisches Patentamt
European Patent Office
Office européen des brevets

(11) Numéro de publication: **0 345 121**
**A1**

(12) # DEMANDE DE BREVET EUROPEEN

(21) Numéro de dépôt: **89401419.0**

(22) Date de dépôt: **24.05.89**

(51) Int. Cl.4: **G 01 J 5/62**
G 01 J 5/08

(30) Priorité: **01.06.88 FR 8807308**

(43) Date de publication de la demande:
**06.12.89 Bulletin 89/49**

(84) Etats contractants désignés:
**AT BE CH DE ES FR GB IT LI NL SE**

(71) Demandeur: **ELECTRICITE DE FRANCE Service National**
**2, rue Louis Murat**
**F-75008 Paris (FR)**

(72) Inventeur: **Denayrolles, Yves**
**34 rue de Verdun**
**F-87110 Le Vesinet (FR)**

**Pillon, Robert**
**29 rue Guillot et Dehelly**
**F-76610 Le Havre (FR)**

(74) Mandataire: **Mestre, Jean et al**
**c/o CABINET LAVOIX 2, place d'Estienne d'Orves**
**F-75441 Paris Cédex 09 (FR)**

(54) **Pyromètre optique à au moins une fibre.**

(57) Le pyromètre comprend au moins une fibre optique (10) transparente à l'infrarouge en verre fluoré, un émetteur de référence (20) de flux infrarouge, un détecteur infrarouge (30) pour recueillir le flux infrarouge émergeant de la fibre optique (10) ou le flux infrarouge issu de l'émetteur de référence (20), un modulateur mécanique (40) de flux infrarouge placé en amont, dans le sens de propagation du flux, du détecteur infrarouge (30) pour interrompre périodiquement et successivement les flux infrarouges émergeant de la fibre optique (10) et issu de l'émetteur de référence (20), un moyen électronique de démodulation (50) pour recevoir le signal de sortie du détecteur (30) et un signal d'asservissement émis par le modulateur mécanique (40) afin d'assurer une mesure synchrone, et un appareil de mesure (60) associé au moyen électronique de démodulation (50) pour indiquer la température à mesurer de la cible irradiant la fibre optique.

C
70
10
20
-21-
40
30
80
71
401
403
-60-
-50-

FIG.1

EP 0 345 121 A1

## Description

### Pyromètre optique à au moins une fibre

L'invention concerne la mesure des températures relativement basses, par exemple comprises entre 30° C et 500° C, et plus spécialement la mesure de températures dans des zones d'accès difficile ou dangereuses et où l'environnement est perturbé (manque de visibilité, température ambiante, pression locale, vibrations, existence de champs électromagnétiques, présence de rayonnements ionisants, ...) sur des cibles tels que des pièces ou des objets hors d'atteinte voire mobiles, ou sous tension électrique élevée.

L'invention porte plus particulièrement sur un pyromètre optique à fibres optiques.

Actuellement, il est classique d'utiliser pour la mesure des températures des thermocouples ou sondes de contact, des pyromètres optiques, des pyromètres à fibre optique en silice.

Toutes ces solutions présentent des inconvénients.

Les thermocouples et sondes de contact exigent le contact thermique physique, intime avec la cible dont on veut mesurer la température. De plus, ces types de thermocouples et sondes sont sensibles aux parasites électromagnétiques et leur temps de réponse est relativement long.

Les pyromètres optiques exigent la vision directe de la cible dont on veut mesurer la température et aussi que le chemin optique suivi par le flux soit transparent dans la bande des longueurs d'onde de l'infrarouge où se situe l'émission principale pour la plage de températures concernées. Il faut alors utiliser des fenêtres optiques spéciales dans les enceintes ou des parois intermédiaires.

Les pyromètres à fibre optique en silice sont, eux, insensibles à des températures inférieures à 500° C environ. Ceci résulte du fait que les fibres optiques faites avec ce matériau présentent un coefficient de transmission très insuffisant dans l'infrarouge.

L"invention vise à remédier à la plupart des inconvénients que présentent les techniques actuelles que l'on vient de rappeller brièvement.

L'invention concerne un pyromètre optique pour la mesure de températures relativement basses qui utilise au moins une fibre optique transparente dans l'infrarouge.

L"invention a pour objet un pyromètre optique à fibre optique pour mesurer des températures relativement basses de cibles caractérisé en ce qu'il comprend au moins une fibre optique transparente à l'infrarouge en verre fluoré associée à une cible, un émetteur de référence de flux infrarouge, un détecteur infrarouge pour recueillir le flux infrarouge émergeant de la fibre ou le flux infrarouge issu de l'émetteur de référence, un modulateur mécanique de flux infrarouge placé en amont, dans le sens de propagation du flux, du détecteur infrarouge pour interrompre périodiquement et successivement les flux infrarouges émergeant de la fibre et issu de l'émetteur de référence, un moyen électronique de démodulation pour recevoir le signal de sortie du capteur et un signal d'asservissement émis par le modulateur mécanique pour assurer une mesure synchrone, et un appareil de mesure associé au moyen électronique de démodulation pour indiquer la température de la cible à mesurer.

Grâce au pyromètre optique suivant l'invention il est possible d'obtenir un signal de sortie stable pour des températures de cible qui sont mêmes de l'ordre de 30° C environ. Pour parvenir à ceci, on utilise une détection synchrone du signal par modulation mécanique du flux infrarouge transmis par la fibre optique et on assure la démodulation à l'aide de circuits électroniques appropriés du moyen électronique de démodulation ; on obtient une stabilisation du signal de référence envoyé sur le détecteur infrarouge en utilisant un émetteur de référence de flux intrarouge interne régulé et en se servant d'un modulateur mécanique qui réfléchit le flux infrarouge issu de l'émetteur de référence vers le détecteur pendant qu'il occulte le flux infrarouge émergeant de la fibre optique.

De plus, pour s'affranchir de la dérive du flux infrarouge émergeant de la fibre optique on assure une compensation en mesurant la température au voisinage de sa sortie et en engendrant un signal de correction. De la sorte, le flux thermique ambiant autour de sortie de la fibre optique, qui se superpose inévitablement au flux infrarouge qu'elle transmet, voit son influence réduite.

En outre, on observera que si l'on utilise plusieurs fibres optiques et qu'on leur associe un mutiplexeur optomécanique il est possible de mesurer les températures propres à plusieurs cibles en se servant toujours du même système de détection final composé du détecteur infrarouge, de l'émetteur de référence ainsi que du modulateur mécanique de flux infrarouge.

D'autres caractéristiques de l'invention apparaîtront à la lecture de la description et des revendications qui suivent et à l'examen du dessin annexé, donné seulement à titre d'exemple, où :

- la Fig.1 est un schéma d'un mode de réalisation d'un pyromètre selon l'invention ;
- la Fig.2A est une vue de détail avec écorchés locaux d'un mode de construction d'un pyromètre selon l'invention à multiplexeur optomécanique ;
- la Fig.2B est une vue partielle analogue à celle de la Fig.2A d'une variante d'exécution ;
- la Fig. 3 est un schéma synoptique des liaisons fonctionnelles d'un pyromètre selon l'invention ; et
- la Fig.4 est un schéma - bloc des circuits électriques pour la mise en oeuvre d'un pyromètre selon l'invention.

La mesure des températures à l'aide de pyromètres optiques et l'utilisation des fibres optiques étant bien connues dans la technique, on ne décrira dans la description qui suit que ce qui concerne l'invention. Pour le surplus, le spécialiste du secteur technique considéré puisera dans les solutions classiques courantes à sa disposition pour faire face aux problèmes particuliers auxquels il est confronté.

Dans la suite on utilisera toujours un même numéro de référence pour désigner un élément homologue quel que soit le mode de réalisation particulier.

Comme cela ressort de l'examen des diverses figures du dessin annexé, un pyromètre optique à au moins une fibre optique pour mesurer des températures relativement basses de cibles C, suivant l'invention, comprend au moins une fibre optique 10, un émetteur de référence 20 de flux infrarouge, un détecteur 30 sensible à l'infrarouge pour recueillir le flux infrarouge émergeant de la fibre 10 ou le flux infrarouge issu de l'émetteur de référence 20, un modulateur mécanique 40 de flux intrarouge placé en amont, dans le sens de propagation du flux, du détecteur infrarouge 30 pour interrompre périodiquement et successivement les flux infrarouges émergeant de la fibre 10 et issu de l'émetteur de référence 20, un moyen électronique de démodulation 50 pour recevoir le signal de sortie du détecteur 30 et un signal d'asservissement émis par le modulateur mécanique 40 pour assurer une mesure synchrone, et un appareil de mesure 60 associé au moyen électronique de démodulation 50 pour indiquer la température à mesurer de la cible C.

Ce pyromètre comprend aussi, s'il y a lieu associé à la fibre optique 10 un système optique d'entrée 70 et un système optique de sortie 71 respectivement pour, d'une part, collecter un flux infrarouge émis par la cible C dont on veut mesurer la température et le diriger sur la fibre optique 10 et pour, d'autre part, rassembler le flux qui émerge de cette dernière, après l'avoir traversée, et l'envoyer sur le détecteur infrarouge 30.

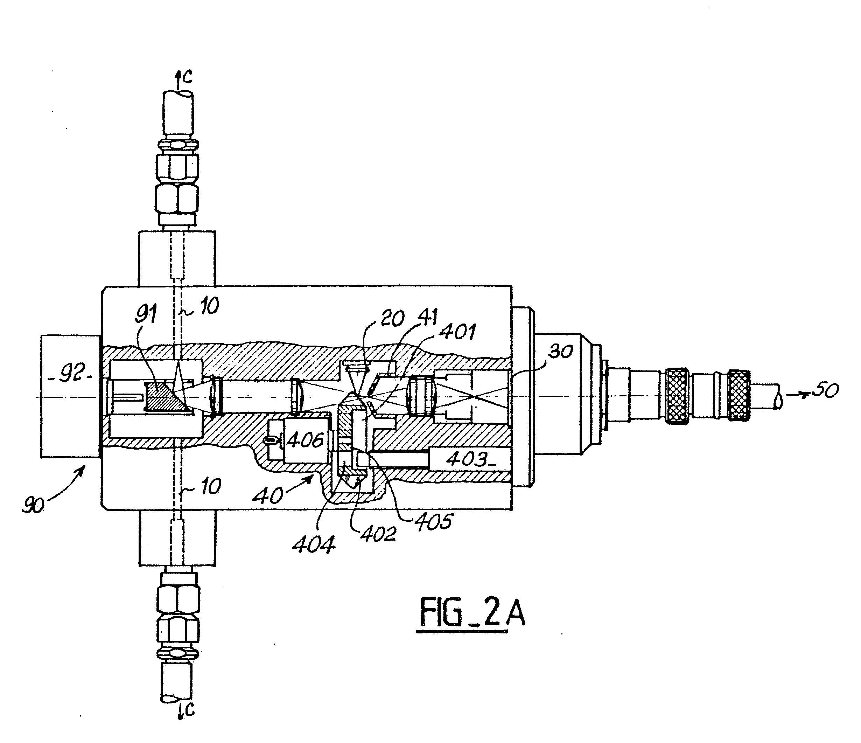

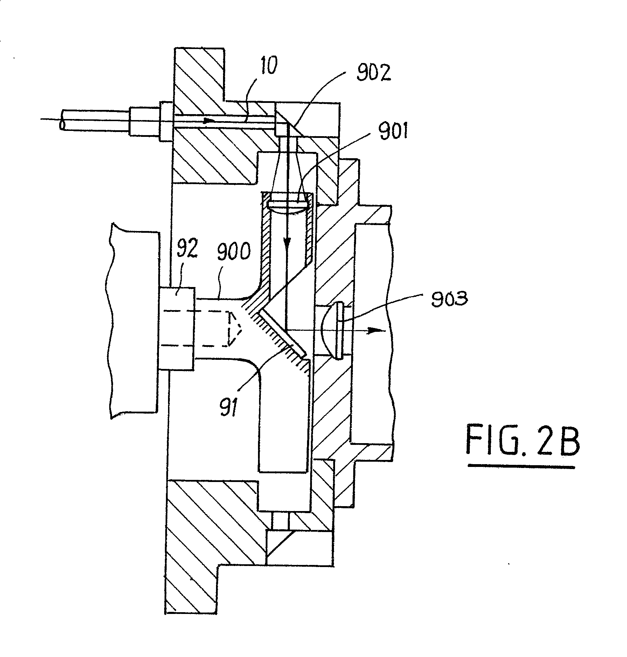

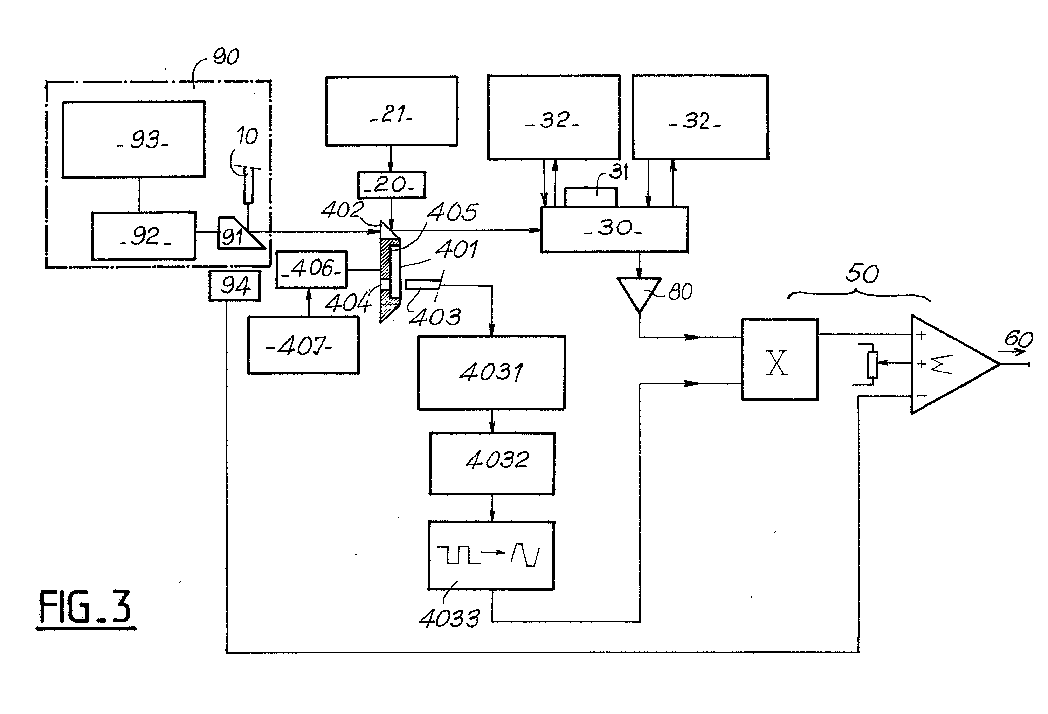

Ce pyromètre optique comprend aussi des circuits électroniques 80 et, s'il y a lieu, un multiplexeur optomécanique 90 (voir Fig.2 et 3).

On reviendra sur chacun de ces constituants pour en décrire en détail la structure et la fonction.

La fibre optique 10 est une fibre en verre fluoré transparente depuis le domaine visible jusque dans l'infrarouge s'étendant jusqu'à cinq microns environ.

Cette fibre qui a, de préférence, un diamètre extérieur total de l'ordre de 0,450 mm se compose d'un coeur de diamètre 0,200 mm entouré d'une gaine de 0,025 mm d'épaisseur et d'un revêtement protecteur en polymère. Cette fibre outre la gaine polymère en PVC par exemple est protégée par une spirale métallique en acier inoxydable lorsque les conditions d'environnement le permettent.

Cette fibre peut être courbée suivant des rayons qui ne peuvent pas être inférieurs à 50 mm.

La fibre optique utilisée a une ouverture numérique de 0,2 et une atténuation spectrale de l'ordre de 1 db par mètre environ entre un et quatre microns de longueur d'onde.

Pour la constitution du pyromètre selon l'invention, on utilise la fibre optique qui porte la référence "IR guide 200/250" sur le catalogue de la société française "Le Verre Fluoré".

S'il y a lieu les extrémités libres de cette fibre sont insérées dans des connecteurs du commerce par exemple ceux produits par la société JAEGER sous la référence SMA-US Monomode convenablement adaptés.

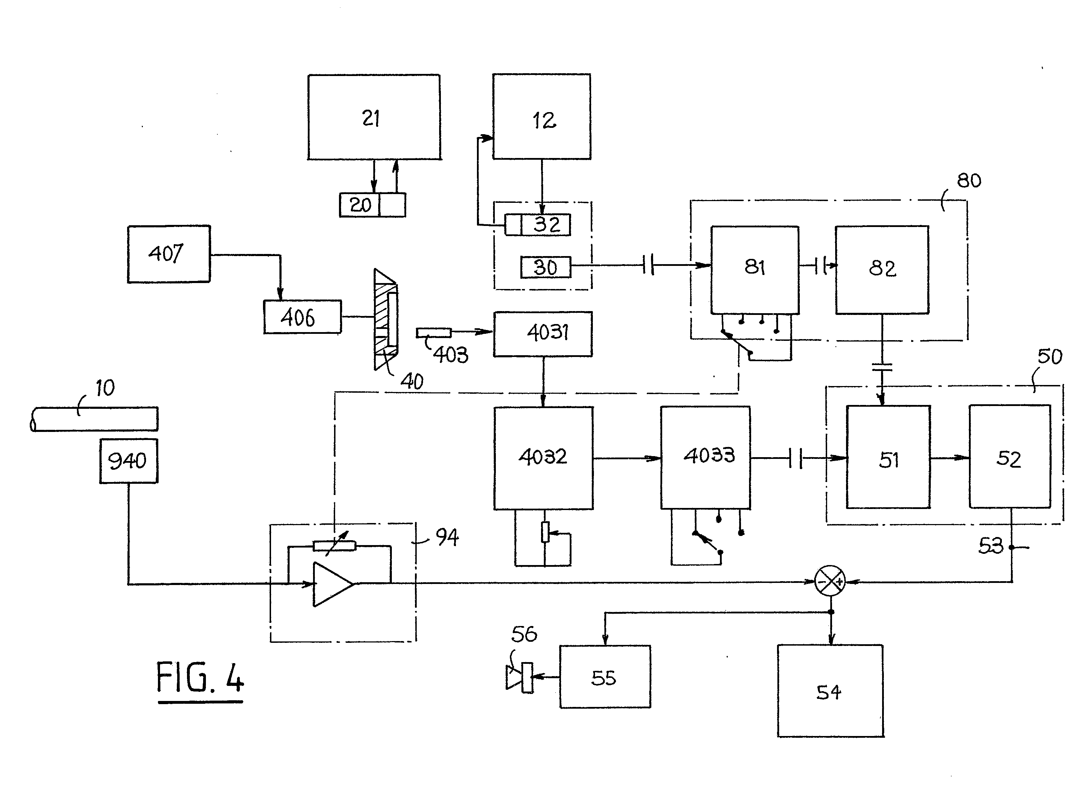

L'émetteur de référence 20 de flux infrarouge fonctionne à la manière d'un corps noir local fait d'une plaquette noircie en contact thermique avec un élément thermoélectrique régulé en température. Ce réglage du point de consigne de l'émetteur de référence, qui est obtenu à l'aide d'un circuit 21 avec une thermistance, permet de choisir la valeur de la température entre la température ambiante et - 20° C avec une stabilité de l'ordre de 0,1 K. Pour ce faire, on utilise des composants du commerce comme cela ressort du schéma - bloc représenté sur la Fig. 4 notamment.

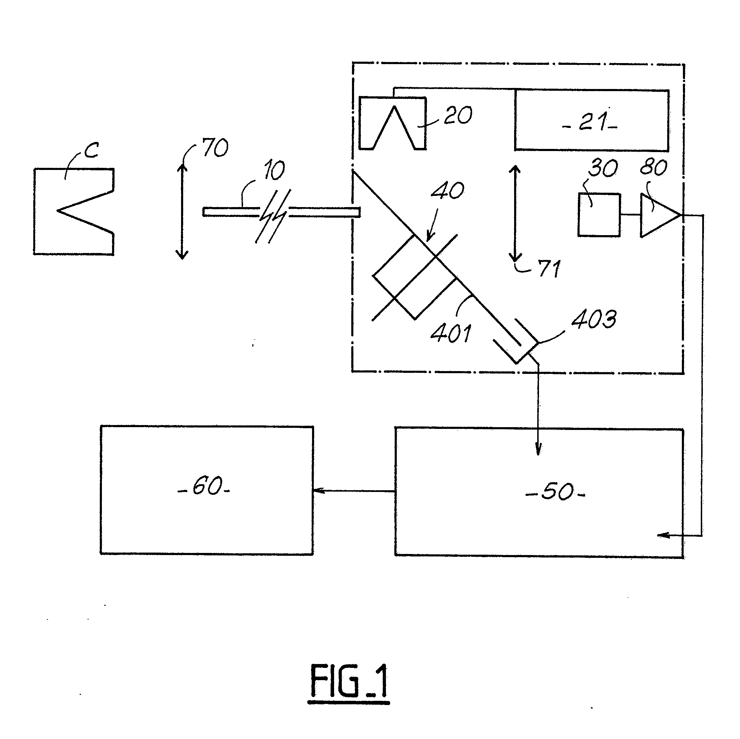

Le détecteur 30 de flux infrarouge est par exemple un détecteur au Pb-Se refroidi par exemple par un réfrigérant à effet thermoélectrique 31, dont le signal de sortie est préamplifié par un circuit 80 comme schématisé sur la Fig.1. Comme cela apparait sur la Fig.4, ce circuit 80 comprend un préamplificateur 81 à gain commutable et un filtre réjecteur 82 (50 - 100 Hz).

On se sert, par exemple, d'un composant de la marque Hamamatsu refroidi à - 10° C ou celui portant la référence OTC 12 S 83T sur le catalogue de la société américaine OPTO ELECTRONICS.

Pour des raisons de meilleur contrôle de sa température ce détecteur 30 est maintenu sur l'axe optique du système à l'aide de quatre modules 32 à effet Peltier dont seuls certains sont schématisés sur le dessin. On choisit par exemple les composants portant la référence CP 1-4 11-10L sur le catalogue de la société américaine MELCOR. Leur fonctionnement correct est assuré par un régulateur 12 à l'aide de sonde comme illustré sur la Fig.4

Pour obtenir le refroidissement nécessaire de ce détecteur infrarouge on utilise de préférence un élément thermoélectrique à deux étages.

Le modulateur mécanique 40 se compose par exemple d'un disque métallique 401 à ailettes 402 égales et équidistantes tournant à vitesse constante pour interrompre périodiquement le flux infrarouge émergeant de la fibre 10. Les ailettes sont, de préférence, réfléchissantes et orientées comme clairement dessiné sur les Fig.1, 2 ou la Fig.3 de manière à renvoyer une partie du flux issu de l'émetteur de référence 20 vers le détecteur 30. Ces ailettes sont rendues réfléchissantes par polissage direct et dorure ou par adjonction de miroirs appropriés.

Dans le mode de réalisation de la Fig.1 on utilise un disque plan d'axe incliné à 45° sur l'axe optique comme illustré. Dans le mode de réalisation de la Fig.2 ou 3 on utilise un disque à ailettes rabattues d'axe parallèle à l'axe optique, comme illustré.

La vitesse de rotation angulaire du disque 401 est contrôlée à l'aide d'un capteur 403 optique à réflexion qui interfère avec une couronne de trous 404 équidistants répartis sur le voile 405 du disque (voir Fig.2 ou 3). La stabilité de la vitesse de rotation est assurée par un régulateur électronique 407, qui agit sur un moteur 406.

Pour le mode de réalisation représenté on utilise un moteur 406 miniature portant la référence 1212 ou 1331 sur le catalogue de la société suisse MINIMOTOR SA et pour capteur optique 403 le composant portant la référence GP 2502 sur le catalogue de la société SCHARP.

Pour le mode de réalisation représenté ce modulateur intercepte les flux infrarouges à la fréquence de 487 Hz. Ainsi le détecteur 30 ne reçoit qu'un flux modulé qui est la différence entre celui en provenance de la fibre et celui de l'émetteur de référence.

Le signal de sortie du capteur 403 alimente un circuit de mise en forme 4031 qui excite un circuit de réglage continu de phase 4032. Ce circuit de réglage de phase 4032 alimente un circuit de réglage de phase par commutation 4033 relié au moyen électronique de démodulation 50.

Le sytème optique d'entrée 70 se compose en pratique de deux miroirs paraboliques hors d'axe, et couverts d'une couche de rhodium. A ces miroirs est associée une lentille en fluorine.

Ce système optique d'entrée 70 est tel que les miroirs ont une distance focale de 19 mm et dévient le faisceau à 90° et la lentille a une distance focale de 50 mm et est disposée de manière que son foyer coïncide avec celui du premier miroir de manière à renvoyer un faisceau parallèle sur le deuxième miroir afin de rassembler très précisément le flux infrarouge émis par la cible C sur la face d'entrée de la fibre optique 10.

Grâce à un tel montage on obtient un pyromètre dont l'angle de champ effectif est petit, de l'ordre de 0,3° ce qui autorise la mesure de la température de cibles de dimensions réduites et éloignées. En réalisant ainsi un grandissement d'environ 300 on a, à deux mètres environ, un champ de l'ordre de cent millimètres.

Le système optique de sortie 71 se compose, comme illustré sur la Fig.2, d'un véhicule associé à une optique de focalisation sur le détecteur 30. Ces composants optiques sont des lentilles plan-convexes ou bi-convexes faites en saphir ou en fluorine. Elles ont par exemple un diamètre de 10 mm et une longueur focale de 20 mm. Au foyer image du véhicule est placé un diaphragme 41 qui ne laisse passer que le flux infrarouge provenant de la fibre optique et de l'environnement immédiat de sa face de sortie. Tous les flux infrarouges parasites qui pourraient atteindre le détecteur 30 sont ainsi en grande partie éliminés. Le modulateur 40 est placé aussi près que possible en amont du diaphragme 41 relativement au trajet des flux infrarouges considérés.

Initialement, pour assurer un alignement correct de l'ensemble des composants optiques on utilise de préférence un laser hélium-néon dont le faisceau est injecté dans la fibre optique par sa face opposée aux composants 70 et 71 considérés.

Pour le cas où les cibles sont plus proches le système optique 70 peut être réduit à une seule lentille en fluorine, de la distance focale convenable ou bien même on peut le supprimer si la cible dont on veut mesurer la température est au voisinage immédiat.

Les liaisons fonctionnelles des différents composants du pyromètre optique à fibres optiques selon l'invention résultent clairement de l'examen de la Fig.3 notamment. On y voit que le signal de sortie du détecteur 30 est envoyé au moyen électronique de démodulation 50 qui reçoit aussi le signal d'asservissement émis par le modulateur mécanique 40 pour assurer une mesure synchrone.

Ce moyen électronique de démodulation 50 qui comprend par exemple un démodulateur 51 et un filtre passe-bas 52 est rélié à un appareil de mesure 60 qui indique la température à mesurer de la cible. Cet appareil de mesure peut être à affichage fugace ou une imprimante, comme il est classique. La liaison se fait, de préférence, comme cela est illustré en détail sur la Fig.4 où figurent une borne de test 53, un circuit conditionneur de signal de sortie 54 (par exemple de type 4 - 20 mA) et un circuit à seuil réglable 55 connecté à une alarme 56.

Le pyromètre selon l'invention comprend des circuits électroniques dont le schéma - bloc est représenté sur la Fig.4.

Avec les circuits adoptés on a une constante de temps réglable jusqu'à plusieurs secondes et un bruit de sortie dont la valeur moyenne correspond à des incertitudes sur la valeur mesurée de la température de la cible de ± 3°C pour une température de 100°C et ± 0,5°C pour une température de 200°C.

Dans le mode de réalisation que l'on vient d'exposer on a utilisé une seule fibre optique 10 associée à une cible C unique dont on veut mesurer la température.

Il est clair que l'on peut utiliser davantage de fibres optiques 10, par exemple vingt. Dans un tel cas il suffit d'associer au pyromètre selon l'invention un multiplexeur 90 par exemple optomécanique.

Comme cela apparaît sur les Fig.2A, 2B et 3, un tel multiplexeur 90 est interposé entre les faces de de sortie des diverses fibres optiques 10 disposées en couronne dont seules certaines sont représentées et le modulateur mécanique 40.

Le multiplexeur 90 comprend par exemple un miroir 91 plan de section elliptique incliné à 45°, comme dessiné, entraîné en rotation, par un moteur 92 pas à pas qui vient explorer cycliquement les vingt fibres optiques associées chacune, à une cible particulière non représentée dont on veut mesurer la température. Ce miroir elliptique renvoit successivement le flux infrarouge émergeant de chacune de ces fibres optiques sur l'axe optique du détecteur 30.

Le moteur 92 est piloté à l'aide d'un circuit de commande 93.

Une variante de réalisation du multiplexeur 90 illustré sur la Fig.2B permet de disposer les fibres optiques parallèlement à l'axe optique du détecteur 30. Ce multiplexeur modifié comprend un tambour 900 mécanique entraîné en rotation par un moteur 92 et équipé d'une lentille 901 en saphir ou en fluorine focalisant à l'infini le flux issu de chaque fibre 10 et préalablement dévié par un petit prisme 902 en fluorine associé. Le flux ainsi collimaté est dévié par un miroir plan 91 de section elliptique sur l'axe optique du détecteur 30 et focalisé par une deuxième lentille 903. Le reste du multiplexeur est identique dans son principe au mode de réalisation précédent.

Comme déjà indiqué, pour minimiser l'influence de l'environnement sur le flux émergeant des fibres, on noircit les surfaces environnantes et on repère la température de celles-ci à l'aide de thermistances 940 seulement schématisées afin de pouvoir, s'il y a lieu effectuer une compensation de température à l'aide du circuit électronique de compensation 94 associé au préamplificateur 81 pour le réglage du gain comme illustré sur la Fig.4.

L'asservissement peut être commodément obtenu à l'aide d'un microcalculateur programmable.

On saisit tout l'intérêt du pyromètre optique à fibres optiques particulières transparentes dans l'infrarouge suivant l'invention.

Ce pyromètre selon l'invention trouve des applications dans divers secteurs techniques où il est nécessaire d'opérer en environnement hostile.

C'est particulièrement le cas des installations nucléaires où il faut surveiller la température superficielle de certains éléments irradiés.

On comprend que lorsqu'on opère sur des cibles irradiées, il n'est pas possible de venir à leur contact et qu'il est même particulièrement déconseillé d'être en visé optique directe pour des raisons de sécurité afin de ne pas être exposé à des rayonnements ionisants.

Grâce au pyromètre suivant l'invention, il est donc possible de placer le détecteur 30 et tout ce qui lui est associé derrière un mur de protection en béton, la visée s'effectuant suivant un trajet sinueux non direct grâce aux fibres optiques 10.

On saisit donc tout l'intérêt du pyromètre optique à fibres optiques selon l'invention pour la mesure de températures relativement basses où le flux infrarouge émis par une cible à étudier peut être du même ordre que celui émis spontanément par des corps à la température ambiante.

Il est clair que le pyromètre suivant l'invention permet aussi des mesures de température de cibles mobiles tels que des arbres tournant du fait de l'absence de contact physique.

**Revendications**

1. Pyromètre optique à fibre optique pour mesurer des températures relativement basses caractérisé en ce qu'il comprend au moins une fibre optique (10) transparente à l'infrarouge en verre fluoré, un émetteur de référence (20) de flux infrarouge, un détecteur infrarouge (30) pour recueillir le flux infrarouge émergeant de la fibre optique (10) ou le flux infrarouge issu de l'émetteur de référence (20), un modulateur mécanique (40) de flux infrarouge placé en amont, dans le sens de propagation du flux, du détecteur infrarouge (30) pour interrompre périodiquement et successivement les flux infrarouges émergeant de la fibre optique (10) et issu de l'émetteur de référence (20), un moyen électronique de démodulation (50) pour recevoir le signal de sortie du détecteur (30) et un signal d'asservissement émis par le modulateur mécanique (40) pour assurer une mesure synchrone, et un appareil de mesure (60) associé au détecteur (50) pour indiquer la température à mesurer de la cible irradiant la fibre optique.

2. Pyromètre selon la revendication 1, caractérisé en ce que le modulateur mécanique (40) comprend un disque (401) à ailettes (402) tournantes et réfléchissantes interposées sur les flux infrarouges émergeant de la fibre optique (10) et issu de l'émetteur de référence (20) de manière à périodiquement occulter le premier et à réfléchir le second.

3. Pyromètre selon la revendication 1 ou 2, caractérisé en ce que à l'une au moins des fibres optiques (10) se trouvent associés un système optique d'entrée (70) et un système optique de sortie (71), respectivement, pour d'une part collecter un flux infrarouge émis par une cible dont on mesure la tem pérature et le diriger sur la fibre optique (10) et pour d'autre part rassembler le flux qui sort de cette dernière (10) après l'avoir traversée.

4. Pyromètre selon la revendication 3, caractérisé en ce que le modulateur mécanique (40) est disposé entre l'extrémité de sortie de la fibre optique (10) et le système optique de sortie (71).

5. Pyromètre selon la revendication 4, caractérisé en ce que les ailettes (402) du modulateur (40) sont inclinées à 45° sur l'axe optique du système.

6. Pyromètre selon l'une quelconque des revendications 3 à 5, caractérisé en ce que le système optique d'entrée (70) comprend deux miroirs paraboliques à couche de rodhium et une lentille en fluorine.

7. Pyromètre selon l'une quelconque des revendications 1 à 6, caractérisé en ce qu'il comprend plusieurs fibres optiques (10) pour former un pyromètre multivoies et un multiplexeur (90) optomécanique à miroir (91) déviateur dont la position est réglable par incrément à l'aide d'un moteur (92) pour commander sa position afin de pouvoir renvoyer successivement le flux infrarouge émergeant de chacune des fibres (10) vers le détecteur infrarouge (30) au travers d'un seul et unique système optique de sortie (71).

C
70
10
20
-21-
40
30
80
71
401
403
-60-
-50-

FIG_1

50
30
401
41
20
403
405
402
404
406
40
10
10
91
92
90
c
c

FIG_2A

902
901
903
10
900
92
91

FIG. 2B

60
W
50
X
-32-
-32-
-30-
31
80
4031
4032
4033
-21-
-20-
405
401
403
402
404
-406-
-407-
90
10
91
94
-93-
-92-

FIG_3

21
12
20
80
407
32
30
81
82
406
4031
403
40
50
10
940
4032
4033
51
52
94
53
56
55
54

FIG. 4

Office européen des brevets

# RAPPORT DE RECHERCHE EUROPEENNE

Numero de la demande

EP 89 40 1419

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | APPLIED OPTICS, vol. 26, no. 4, 15 février 1987, pages 607-609, Optical Society of America; S.R. MORDON et al.: "Temperature measurement with a zirconium fluoride glass fiber" * En entier * | 1-5 | G 01 J 5/62<br>G 01 J 5/08 |
| A | | 6 | |
| Y | FR-A-2 080 953 (AGA AKTIEBOLAG) * Figures 1,2; page 2, lignes 1-14,30-32 * | 1-5 | |
| Y | GB-A-2 161 924 (NEGRETTI & ZAMBRA) * Figure 1; revendications 1,2,6 * | 3 | |
| A | | 6 | |
| A | OPTICAL ENGINEERING, vol. 17, no. 1, janvier/février 1978, pages 14-22; R.W. DROZEWSKI et al.: "Limb infrared monitor of the stratosphere (LIMS) experiment" * Figure 5; page 18, colonne de gauche, ligne 29 * | 6 | **DOMAINES TECHNIQUES RECHERCHES (Int. Cl.4)** |
| | | | G 01 J<br>G 02 B |
| A | W.G. DRISCOLL et al.: "Handbook of Optics", 1978, pages 7-148,8-91,92, McGraw-Hill, New York, US * Figures 219,97 * | 6 | |
| A | FR-A-2 312 767 (IRSID) * Revendication 1 * -/- | 7 | |

Le présent rapport a été établi pour toutes les revendications

| Lieu de la recherche | Date d'achèvement de la recherche | Examinateur |
|---|---|---|
| LA HAYE | 07-08-1989 | KLEIKAMP B.M.H.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Office européen des brevets

# RAPPORT DE RECHERCHE EUROPEENNE

Numero de la demande

EP 89 40 1419

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 4, no. 134 (P-28)[616], septembre 1980, page 125 P 28; & JP-A-55 87 107 (FUJITSU K.K.) 01-07-1980<br>----- | 7 | |
| | | | DOMAINES TECHNIQUES RECHERCHES (Int. Cl.4) |

Le présent rapport a été établi pour toutes les revendications

| Lieu de la recherche | Date d'achèvement de la recherche | Examinateur |
|---|---|---|
| LA HAYE | 07-08-1989 | KLEIKAMP B.M.H.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)